# EUROPÄISCHE PATENTSCHRIFT

(11) **EP 1 172 416 B1**
(45) Veröffentlichungstag und Bekanntmachung des Hinweises auf die Patenterteilung: **13.08.2003**
(21) Anmeldenummer: 01890166.0
(22) Anmeldetag: 31.05.2001
(51) Int. Cl.: C08L 95/00, C08J 11/00

(54) **Verfahren zur Wiederverwendung ölkontaminierten Gesteinmaterials**
Process for re-using oil contaminated stony materials
Procédé pour la réutilisation des matériaux pierreux contaminés par de l'huile

(30) Priorität: 12.07.2000 AT 11982000
(43) Veröffentlichungstag der Anmeldung: 16.01.2002
(73) Patentinhaber: Swietelsky Bauges.m.b.H., 4050 Traun (AT)
(72) Erfinder: Kostjak, Michael, Dipl. Ing. Dr., 4212 Neumarkt i. M. (AT)
(74) Vertreter: Hübscher, Helmut, Dipl.-Ing.

(56) Entgegenhaltungen:
- EP-A- 0 116 816
- DE-A- 4 238 307
- GB-A- 1 603 514

## Beschreibung

Die Erfindung bezieht sich auf ein Verfahren zur Wiederverwendung ölkontaminierten Gesteinsmaterials, das, gegebenenfalls nach einer Zerkleinerung mit einem heißen Gesteinsmaterial vermischt, vom anhaftenden Oberflächenwasser befreit und unter Bindung des verbleibenden Öls mit einem bituminösen Bindemittel an den Materialoberflächen zur Asphaltherstellung genutzt wird.

Ein derartiges Verfahren ist beispielsweise aus der DE 42 38 307 A1 bekannt. Dabei ergibt sich allerdings eine wenig zufriedenstellende Bindung des gesamten Gesteinsmaterials mit dem Bindemittel, da das gesamte Gesteinsmaterials mit dem Bindemitte, da das gesamte Gesteinsmaterial nach dem Mischvorgang mit Öl benetzt ist, wodurch sich die Haftung des gesamten Bindemittels am Gesteinsmaterial verringert.

Eine Behandlung ölkontamierten Gesteinsmaterials erfolgt bisher auch durch Ablagerung auf Sonderdeponien oder durch ein Verbrennen des anhaftenden Öls oder ein biologisches Abbauen der in den Ölen enthaltenen Kohlenwasserstoffe durch Mikroorganismen, wobei im Falle einer Behandlung größerer kontaminierter Gesteinsmaterialmengen praktisch nur das aufwendige und wegen der Eluierbarkeit des Öls für die Umwelt heikle Deponieren in Frage kommt und eine Wiederverwendung dieses Gesteinsmaterials nicht möglich ist.

Der Erfindung liegt daher die Aufgabe zugrunde, ein Verfahren der eingangs geschilderten Art anzugeben, das eine platzsparende, sichere und umweltschonende Wiederverwendung ölverschmutzten Gesteins erlaubt.

Die Erfindung löst diese Aufgabe dadurch, daß das vorgetrocknete Gesteinsmaterial mit dem bituminösen Bindemittel zu einem Asphaltheißmischgut vermischt wird, bevor das feuchte und ölkontaminierte Gesteinsmaterial dem Asphaltmischgut zugegeben wird.

Um ein rationelles Trocknen zu gewährleisten, wird das feuchte und ölkontaminierte Gesteinsmaterial einem Asphaltheißmischgut aus vorgetrocknetem Gesteinsmaterial und bituminösem Bindemittel zugegeben, womit eine rasche Verdunstung des Oberflächenwassers aufgrund der zugeführten Wärme aus dem Asphaltheißmischgut erfolgt. Das Asphaltheißmischgut wird über technisch bekannte Verfahren unter Trocknung des Gesteinsmaterials durch heiße Brennerabgase in einer Trockentrommel und Zugabe heißen Bitumens vorbereitet und diesem Asphaltheißmischgut dann das kontaminierte Gesteinsmaterial in einem geeigneten Mischer zugemengt, so daß zur Bindung des Öls auch das bituminöse Bindemittel des Heißmischgutes zur Verfügung steht. Das kontaminierte Gesteinsmaterial dient hier gleich als Zusatz für die Asphaltmischung, welcher Zusatz durchaus ca. 20 Masse-% betragen kann. Das kontaminierte Gesteinsmaterial kann so problemlos zur Asphaltherstellung genützt und damit wiederverwendet werden und bedarf keiner weiteren Behandlung bzw. Deponierung mehr.

Vorteilhafterweise wird die Temperatur des Asphaltheißmischgutes so hoch gewählt, daß nach Zugabe des Gesteinsmaterials unter Verdunstung des damit eingebrachten Wassers eine für die Weiterverarbeitung des neu entstandenen Asphaltheißmischgutes geeignete Temperatur, vorzugsweise eine Temperatur von 140°C - 190°C, erreicht wird. Durch den entsprechenden Überschuß an Wärmeinhalt des Heißmischgutes wird direkt die für die Verdunstung des vorhandenen Wassers sowie die Erwärmung des eingebrachten Materials notwendige Energie aufgebracht und das neu entstehende Asphaltheißmischgut ist sofort optimal zur Weiterverarbeitung geeignet.

Eine weitere Möglichkeit der Trocknung ergibt sich dadurch, daß das feuchte und ölkontaminierte Gesteinsmaterial mit einer Emulsion aus einem bituminösen Bindemittel versetzt und zumindest bis zur Verdunstung des beim Abscheiden des Bindemittels aus der Emulsion anfallenden Wassers, gegebenenfalls unter Wärmezufuhr, lagern gelassen wird, worauf das getrocknete Mischgut aus Gesteinsmaterial und Bindemittel aufgebrochen und einer Weiterverarbeitung zugeführt wird. Bei diesem Kaltverfahren erfolgt die Trocknung des Gesteinsmaterials durch eine Verdrängung des Wassers von der Gesteinsoberfläche mittels der eingesetzten Emulsion, da sich das Oberflächenwasser mit dem Emulsionswasser vermischt. Aufgrund der emulsionsspezifischen Eigenschaften scheidet sich das Bindemittel aus der Emulsion auf dem Gesteinsmaterial ab, das dabei anfallende Wasser verdunstet durch die Umgebungsbedingungen und es kommt wieder zu einer dauerhaften Bindung der kontaminierenden Öle an den Gesteinsmaterialoberflächen. Um eine gute Verteilung der Emulsion innerhalb des Gesteinsmaterials zu erreichen, werden vorzugsweise langsam brechende Emulsionen verwendet, wobei eine entsprechende Lagerung des Mischgutes aus Gesteinsmaterial und Emulsion wegen des langsamen Verdunstens des Wassers erforderlich ist, welche Verdunstung selbstverständlich durch eine Wärmezufuhr beschleunigt werden kann. Ist das Mischgut getrocknet, kann es bedarfsweise aufgebrochen und zerkleinert und einer Weiterverarbeitung zugeführt werden, wobei es möglich ist, dieses Mischgut einer Asphaltmischung zur Asphaltherstellung zuzusetzen, das aufgebrochene Mischgut als ungebundenes Tragschichtmaterial zu verwenden oder wie anderes Altasphaltmaterial einzusetzen.

## Patentansprüche

1. Verfahren zur Wiederverwendung ölkontaminierten Gesteinsmaterials, das, gegebenenfalls nach einer Zerkleinerung mit einem heißen Gesteinsmaterial vermischt, vom anhaftenden Oberflächenwasser befreit und unter Bindung des verbleibenden Öls mit einem bituminösen Bindemittel an den Materialoberflächen zur Asphaltherstellung genutzt wird, **dadurch gekennzeichnet, daß** das vorgetrocknete Gesteinsmaterial mit dem bituminösen Bindemittel zu einem Asphaltheißmischgut vermischt wird, bevor das feuchte und ölkontaminierte Gesteinsmaterial dem Asphaltmischgut zugegeben wird.

2. Verfahren nach Anspruch 1, **dadurch gekennzeichnet, daß** die Temperatur des Asphaltheißmischgutes so hoch gewählt wird, daß nach Zugabe des Gesteinsmaterials und der Verdunstung des damit eingebrachten Wassers eine für die Weiterverarbeitung des neu entstandenen Asphaltheißmischgutes geeignete Temperatur, vorzugsweise eine Temperatur von 140 °C - 190°C, erreicht wird.

3. Verfahren zur Wiederverwendung ölkontaminierten Gesteinsmaterials, das, gegebenenfalls nach einer Zerkleinerung vom anhaftenden Oberflächenwasser befreit und unter Bindung des verbleibenden Öls mit einem bituminösen Bindemittel an den Materialoberflächen zur Asphaltherstellung genutzt wird, **dadurch gekennzeichnet, daß** das feuchte und ölkontaminierte Gesteinsmaterial mit einer Emulsion aus einem bituminösen Bindemittel versetzt und zumindest bis zur Verdunstung des beim Abscheiden des Bindemittels aus der Emulsion anfallenden Wassers, gegebenenfalls unter Wärmezufuhr, lagern gelassen wird, worauf das getrocknete Mischgut aus Gesteinsmaterial und Bindemittel aufgebrochen und einer Weiterverarbeitung zugeführt wird.

## Claims

1. A method of reusing oil-contaminated rock material which, if required, after comminution mixed with a hot rock material has the adhering surface water removed and is used for asphalt production, the remaining oil being bonded to the material surfaces with a bituminous binding agent, **characterised in that** the pre-dried rock material is mixed with the bituminous binding agent to form an asphalt hot mix before the wet and oil-contaminated rock material is added to the asphalt mix.

2. A method according to claim 1, **characterised in that** the temperature of the asphalt hot mix is selected to be such that after addition of the rock material and evaporation of the water introduced therewith a temperature is reached which is suitable for further processing of the newly formed asphalt hot mix, preferably a temperature of 140°C to 190°C.

3. A method of re-using oil-contaminated rock material which, if required, has the adhering surface water removed after comminution and is used for asphalt production, the remaining oil being bonded to the material surfaces with a bituminous binding agent, **characterised in that** the wet and oil-contaminated rock material is mixed with an emulsion of a bituminous binding agent and is left to stand, at least until evaporation of the water occurring on separation of the binding agent from the emulsion, heat being supplied if required, whereupon the dried mix of rock material and binding agent is broken up and passed to further processing.

## Revendications

1. Procédé pour la réutilisation de matériaux pierreux contaminés par de l'huile, qui est utilisé, le cas échéant après un broyage, mélangé à un matériau pierreux très chaud, débarrassé de l'eau de surface adhérente et en liant l'huile subsistante à un liant bitumineux sur les surfaces de matériau dans le but de produire de l'asphalte, **caractérisé en ce que** le matériau pierreux pré-séché est mélangé au liant bitumineux pour donner un produit mélangé chaud d'asphalte avant que le matériau pierreux humide et contaminé par l'huile soit ajouté au produit mélangé d'asphalte.

2. Procédé selon la revendication 1, **caractérisé en ce que** la température du produit mélangé chaud d'asphalte est choisie à une valeur telle que, après addition du matériau pierreux et évaporation de l'eau introduite avec lui, on atteigne une température convenant pour le retraitement du produit mélangé chaud d'asphalte nouvellement produit, de préférence une température de 140°C à 190°C.

3. Procédé pour la réutilisation de matériaux pierreux contaminés par de l'huile, qui est utilisé, le cas échéant après un broyage, débarrassé de l'eau de surface adhérente et en liant l'huile subsistante à un liant bitumineux sur les surfaces de matériau dans le but de produire de l'asphalte, **caractérisé en ce que** le matériau pierreux humide et contaminé par de l'huile est mélangé à une émulsion formée d'un liant bitumineux et est laissé stocké au moins jusqu'à évaporation de l'eau apparue lors de la séparation du liant vis-à-vis de l'émulsion, le cas échéant accompagné d'un apport thermique, suite à quoi le produit mélangé et séché, formé de matériau pierreux et de liant, est concassé et amené à un retraitement.
